# EUROPÄISCHE PATENTSCHRIFT

(11) **EP 2 926 943 B1**
(45) Veröffentlichungstag und Bekanntmachung des Hinweises auf die Patenterteilung: **11.01.2017**
(21) Anmeldenummer: 15159243.3
(22) Anmeldetag: 16.03.2015
(51) Int. Cl.: B23Q 3/06, B23D 47/02, B23Q 7/04, B23Q 7/05

(54) **PROFILBEARBEITUNGSVORRICHTUNG UND VERFAHREN ZUM BEARBEITEN VON PROFILEN**
PROFILE MACHINING DEVICE AND METHOD FOR MACHINING PROFILES
DISPOSITIF D'USINAGE DE PROFILÉS ET PROCÉDÉ DESTINÉ À L'USINAGE DE PROFILÉS

(30) Priorität: 24.03.2014 DE 102014205404
(43) Veröffentlichungstag der Anmeldung: 07.10.2015
(73) Patentinhaber: elumatec AG, 75417 Mühlacker (DE)
(72) Erfinder: Hettler, Andreas, 75417 Mühlacker (DE)
(74) Vertreter: Patentanwälte Ruff, Wilhelm, Beier, Dauster & Partner mbB

(56) Entgegenhaltungen:
- EP-A1- 2 404 691
- DE-U1-202013 000 229

## Beschreibung

Die Erfindung betrifft eine Profilbearbeitungsvorrichtung mit wenigstens einem Werkzeug zur Profilbearbeitung, wenigstens einer Spannvorrichtung für ein zu bearbeitendes Profil und einer Vorschubeinrichtung zum Bewegen eines zu bearbeitenden Profils in einer Transportrichtung durch die Profibearbeitungsvorrichtung, wobei die Transportrichtung einer Längsrichtung des zu bearbeitenden Profils entspricht. Die Erfindung betrifft auch ein Verfahren zum Bearbeiten von Profilen mit einer erfindungsgemäßen Profibearbeitungseinrichtung.

Aus der europäischen Offenlegungsschrift EP 2 404 691 A1 ist eine Profilbearbeitungsvorrichtung mit mehreren Werkzeugen zur Profilbearbeitung, wenigstens einer Spannvorrichtung für ein zu bearbeitendes Profil und einer Vorschubeinrichtung zum Bewegen eines zu bearbeitenden Profils in einer Transportrichtung, die einer Längsrichtung des Profils entspricht, durch die Profilbearbeitungsvorrichtung bekannt. Das Werkzeug ist an einem Werkzeugträger in Form eines Drehkranzes angeordnet. Als Spannvorrichtungen sind Plattenspanner und Rollenspanner vorgesehen. Die Rollenspanner werden zum Führen des Profils während einer Profilbearbeitung des Werkzeugs bei gleichzeitiger Bewegung des Profils mittels der Vorschubeinrichtung eingesetzt. Der als Drehkranz ausgebildete Werkzeugträger ist in Längsrichtung des Profils unbeweglich angeordnet und kann somit lediglich um die Längsrichtung gedreht werden. Als Werkzeug ist unter anderem eine Kreissäge auf dem Drehkranz vorgesehen.

Aus der deutschen Gebrauchsmusterschrift DE 20 2013 000 229 U1 ist eine weitere Profilbearbeitungsvorrichtung mit mehreren Werkzeugen zur Profilbearbeitung an einem als Drehkranz ausgebildeten Werkzeugträger bekannt. Auch dort ist der Drehkranz in Längsrichtung des Profils unbeweglich angeordnet und kann lediglich um die Längsrichtung gedreht werden.Mit der Erfindung soll eine verbesserte, flexibel einzusetzende Profibearbeitungseinrichtung und ein verbessertes Verfahren zur Profilbearbeitung bereitgestellt werden.

Erfindungsgemäß ist hierzu eine Profilbearbeitungsvorrichtung mit den Merkmalen von Anspruch 1 bzw. ein Verfahren zum Bearbeiten von Profilen mit den Merkmalen von Anspruch 7 vorgesehen. Vorteilhafte Weiterbildungen der Erfindung sind in den Unteransprüchen angegeben.

Erfindungsgemäß ist eine Profilbearbeitungsvorrichtung mit wenigstens einem Werkzeug zur Profilbearbeitung, wenigstens einer Spannvorrichtung für ein zu bearbeitendes Profil und einer Vorschubeinrichtung zum Bewegen eines zu bearbeitenden Profils in einer Transportrichtung, die einer Längsrichtung des Profils entspricht, durch die Profilbearbeitungsvorrichtung vorgesehen, bei der die Spannvorrichtung wenigstens einen Plattenspanner zum Fixieren eines zu bearbeitenden Profils während der Profilbearbeitung mittels des Werkzeugs und wenigstens einen Rollenspanner zum Führen des Profils während einer Profilbearbeitung des Werkzeugs bei gleichzeitiger Bewegung des Profils mittels der Vorschubeinrichtung aufweist. Das Werkzeug ist an einem in und entgegen einer Längsrichtung eines zu bearbeitenden Profils verschiebbaren Werkzeugträger angeordnet, wobei das Werkzeug und der Werkzeugträger ausgebildet sind, das Profil im Wesentlichen allseitig zu bearbeiten. Indem die Spannvorrichtung sowohl wenigstens einen Plattenspanner als auch wenigstens einen Rollenspanner aufweist, ist die erfindungsgemäße Profilbearbeitungsvorrichtung äußerst flexibel für zwei unterschiedliche Bearbeitungsverfahren einsetzbar. Zum einen kann bei Verwendung der Plattenspanner das zu bearbeitende Profil relativ zu einem Maschinenrahmen fixiert werden und das Werkzeug wird relativ zum Maschinenrahmen bewegt, um eine Profilbearbeitung durchzuführen. Bei einer solchen Betriebsart lässt sich eine hohe Bearbeitungspräzision und demzufolge eine geringe Bearbeitungstoleranz erzielen. Die Bearbeitung benötigt aber vergleichsweise viel Zeit, da für jeden neuen Bearbeitungsvorgang umgespannt werden muss, also die Plattenspanner gelöst und das Profil für die nächste Bearbeitung weitergeschoben werden muss. Die erfindungsgemäße Profilbearbeitungsvorrichtung ist aber auch in der Lage, Profile gemäß einer zweiten Betriebsart zu bearbeiten, bei der das Profil mittels der Rollenspanner geführt wird und während der Profilbearbeitung das Werkzeug selbst relativ zum Maschinenrahmen wenigstens in und entgegen der Transportrichtung blockiert ist und dafür das Profil mittels der Vorschubeinrichtung in oder entgegen der Transportrichtung bewegt wird. Bei dieser zweiten Betriebsart ist zwar in der Regel die erreichbare Bearbeitungspräzision geringer, aber da die Zeit für das notwendige Umspannen der Profile entfällt, lassen sich kürzere Bearbeitungszeiten erzielen. Indem nun mit der erfindungsgemäßen Profilbearbeitungsvorrichtung Profile sowohl mit einem Profilvorschub während der Profilbearbeitung, und infolgedessen unter Verwendung von Rollenspannern, als auch bei relativ zum Maschinenrahmen fixiertem Profil, und infolgedessen mit der Verwendung von Plattenspannern, bearbeitet werden können, ist die erfindungsgemäße Profilbearbeitungsvorrichtung äußerst flexibel einsetzbar. Je nachdem, welche Randbedingungen vorgegeben sind, beispielsweise hohe Bearbeitungspräzision oder hohe Bearbeitungsgeschwindigkeit, und in Abhängigkeit davon, welche Art von Profilen bearbeitet werden sollen, beispielsweise Kunststoffprofile oder Aluminiumprofile, kann die Betriebsart eingestellt werden, die unter Berücksichtigung der vorgegebenen Randbedingungen ein optimales Arbeitsergebnis erwarten lässt. Mit anderen Worten können alternativ die Rollenspanner oder die Plattenspanner ausgewählt werden. Es erscheint dabei selbstverständlich, dass in einem Fall, in dem mittels der Plattenspanner ein zu bearbeitendes Profil relativ zum Maschinenrahmen fixiert wird, zusätzlich auch noch die ohnehin vorhandenen Rollenspanner verwendet werden können, um das Profil noch sicherer zu fixieren oder um beispielsweise Vibrationen und unerwünschte Schwingungen im Profil zu vermeiden.

Das Werkzeug ist an einem in und entgegen einer Längsrichtung eines zu bearbeitenden Profils verschiebbaren Werkzeugträger angeordnet, wobei das Werkzeug und der Werkzeugträger ausgebildet sind, das Profil im Wesentlichen allseitig zu bearbeiten. Ein solcher Werkzeugträger kann vorteilhafterweise als in und entgegen der Längsrichtung bzw. der Transportrichtung verschiebbares Portal ausgebildet sein. Ein solches Portal kann sehr steif ausgebildet werden, um eine hohe Bearbeitungspräzision zu ermöglichen. An dem Werkzeugträger bzw. Portal kann vorteilhafterweise ein Rollenspanner angeordnet werden. Mittels eines solchen Rollenspanners kann ein zu bearbeitendes Profil unmittelbar neben der Bearbeitungsstelle durch das Werkzeug fixiert werden. Dadurch kann eine hohe Bearbeitungspräzision erzielt werden, und zwar sowohl bei einem Vorschub des Profils während der Profilbearbeitung als auch bei einer Fixierung des Profils relativ zum Maschinenrahmen während der Profilbearbeitung. Mit dem Werkzeug kann das Profil von oben, unten, von den beiden Seiten her und gegebenenfalls auch an den beiden Stirnseiten bearbeitet werden, so dass alle bei der Profilbearbeitung erforderlichen Bearbeitungen durchgeführt werden können.

Erfindungsgemäß sind Mittel zum Einstellen einer ersten Betriebsart, bei der das zu bearbeitende Profil mittels der Plattenspanner relativ zu einem Maschinenrahmen fixiert ist, oder einer zweiten Betriebsart, bei der das zu bearbeitende Profil mittels wenigstens eines der Rollenspanner geführt ist und das Profil mittels der Vorschubeinrichtung bewegt wird, vorgesehen.

Durch Vorsehen von Mitteln zum Einstellen einer gewünschten Betriebsart lässt sich die erfindungsgemäße Profilbearbeitungseinrichtung in sehr einfacher Weise auf die gewünschte Betriebsart umstellen. Eine solche Einstellung der gewünschten Betriebsart kann manuell durch einen Bediener erfolgen. Alternativ ist eine automatische Einstellung in Abhängigkeit von vorgegebenen Randbedingungen oder auch durch Vorgabe von einer Prozesssteuerung möglich.

Vorteilhafterweise ist an dem verschiebbaren Werkzeugträger oder Portal eine Sägeeinrichtung angeordnet. Das Vorsehen einer Säge erhöht die Flexibilität der erfindungsgemäßen Profilbearbeitungseinrichtung.

Vorteilhafterweise kann an dem verschiebbaren Werkzeugträger oder verschiebbaren Portal ein Drehkranz mit wenigstens einem Werkzeug angeordnet sein, wobei eine Drehachse des Drehkranzes senkrecht zur Transportrichtung eines Profils angeordnet ist und wobei ein zu bearbeitendes Profil innerhalb des Drehkranzes angeordnet ist.

Das Vorsehen eines Drehkranzes ermöglicht es, ein Profil im Wesentlichen allseitig zu bearbeiten und eine große Zahl von Werkzeugen kann platzsparend auf dem Drehkranz untergebracht werden. Vorteilhafterweise ist der Drehkranz in zwei senkrecht zur Transportrichtung liegenden Richtungen verschiebbar an dem Werkzeugträger angeordnet.

Bei dem erfindungsgemäßen Verfahren zum Bearbeiten von Profilen wird eine erfindungsgemäße Profilbearbeitungseinrichtung eingesetzt. Vorgesehen ist das Auswählen wenigstens einer ersten oder zweiten Betriebsart in Abhängigkeit von vorgegebenen Randbedingungen, wobei bei der ersten Betriebsart der wenigstens eine Plattenspanner zum Fixieren des Profils während einer Profilbearbeitung mit dem Werkzeug ausgewählt wird und wobei bei der zweiten Betriebsart der wenigstens eine Rollenspanner zum Führen des Profils während einer Profilbearbeitung mit dem Werkzeug ausgewählt wird.

Bei der ersten Betriebsart kann während der Profilbearbeitung die Vorschubeinrichtung deaktiviert werden und das wenigstens eine Werkzeug wird relativ zu einem Maschinenrahmen wenigstens in und entgegen der Transportrichtung bewegt. Bei dieser ersten Betriebsart lässt sich durch das relativ zum Maschinenrahmen fixierte Profil eine hohe Bearbeitungspräzision erreichen. Auch können die Kräfte, die vom Werkzeug auf das Profil ausgeübt werden, vergleichsweise groß gewählt werden, da das Profil durch die Plattenspanner sicher fixiert ist. Diese erste Betriebsart mit relativ zum Maschinenrahmen fixiertem Profil ist daher unter anderem für Profile mit hohen Wandstärken oder aus vergleichsweise harten Materialien geeignet, beispielsweise Aluminiumprofile.

Bei der zweiten Betriebsart wird während der Profilbearbeitung die Vorschubeinrichtung aktiviert und das wenigstens eine Werkzeug wird relativ zum Maschinenrahmen gegenüber einer Bewegung wenigstens in und entgegen der Transportrichtung blockiert. Bei dieser zweiten Betriebsart wird somit während der Profilbearbeitung das Profil mittels der Vorschubeinrichtung in oder entgegen der Transportrichtung bewegt, wohingegen das Werkzeug stillsteht. Diese zweite Betriebsart eignet sich daher für schnelle Bearbeitungen mit geringer Durchlaufzeit bei geringeren Anforderungen an die Bearbeitungspräzision. Beispielsweise ist diese zweite Betriebsart in besonderer Weise für die Bearbeitung von Kunststoffprofilen geeignet.

In Weiterbildung der Erfindung kann eine dritte Betriebsart in Abhängigkeit von vorgegebenen Randbedingungen ausgewählt werden, wobei bei der dritten Betriebsart der wenigstens eine Rollenspanner zum Führen des Profils während einer Profilbearbeitung ausgewählt wird, wobei während der Profilbearbeitung die Vorschubeinrichtung aktiviert wird und wobei während der Profilbearbeitung das wenigstens eine Werkzeug relativ zum Maschinenrahmen wenigstens in und entgegen der Transportrichtung bewegt wird.

Diese dritte Betriebsart kombiniert somit einen Vorschub des Profils in oder entgegen der Transportrichtung während der Bearbeitung sowie eine Bewegung des Werkzeugs in und entgegen der Transportrichtung.

In Weiterbildung der Erfindung weisen die Randbedingungen eine gewünschte Bearbeitungstoleranz bei der Profilbearbeitung, eine gewünschte Bearbeitungsgeschwindigkeit oder Durchlaufzeit bei der Profilbearbeitung, eine vorgegebene Spannkraft auf das Profil, ein Material des zu bearbeitenden Profils, eine Oberfläche beziehungsweise Oberflächenbeschaffenheit des zu bearbeitenden Profils, eine Wandstärke des zu bearbeitenden Profils, eine Steifigkeit des zu bearbeitenden Profils und/oder ein für die Profilbearbeitung vorgegebenes Werkzeug auf.

In Abhängigkeit dieser Randbedingungen kann ein Bediener manuell oder eine Steuerung der erfindungsgemäßen Profilbearbeitungsvorrichtung automatisch entscheiden, welche Betriebsart gewählt wird und ob Plattenspanner und/oder Rollenspanner zum Fixieren bzw. Führen des Profils eingesetzt werden. Bei hoher Wandstärke eines zu bearbeitenden Profils ist beispielsweise zu erwarten, dass die vom Werkzeug auf das Profil ausgeübten Kräfte vergleichsweise hoch sein werden, so dass dann die Plattenspanner ausgewählt werden, um eine Verschiebung des Profils während der Bearbeitung sicher zu vermeiden. Weist das zu bearbeitende Profil beispielsweise eine sehr geringe Wandstärke auf, tendiert aber andererseits dazu, zu schwingen, so können ebenfalls die Plattenspanner ausgewählt werden, um solche unerwünschten Schwingungen während der Profilbearbeitung zu vermeiden. Wird dahingegen beispielsweise ein Kunststoffprofil bearbeitet, so wird gemäß der Erfindung die Vorschubeinrichtung während der Profilbearbeitung aktiviert, um möglichst kurze Durchlaufzeiten bei der Profilbearbeitung zu erreichen.

In Weiterbildung der Erfindung erfolgt das Auswählen zwischen den Betriebsarten automatisch mittels einer Steuereinheit der Profilbearbeitungseinrichtung.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine schematische Darstellung einer erfindungsgemäßen Profilbearbeitungsvorrichtung in einer ersten Betriebsart und
- Fig. 2: die Profilbearbeitungsvorrichtung der Fig. 1 in einer zweiten Betriebsart.

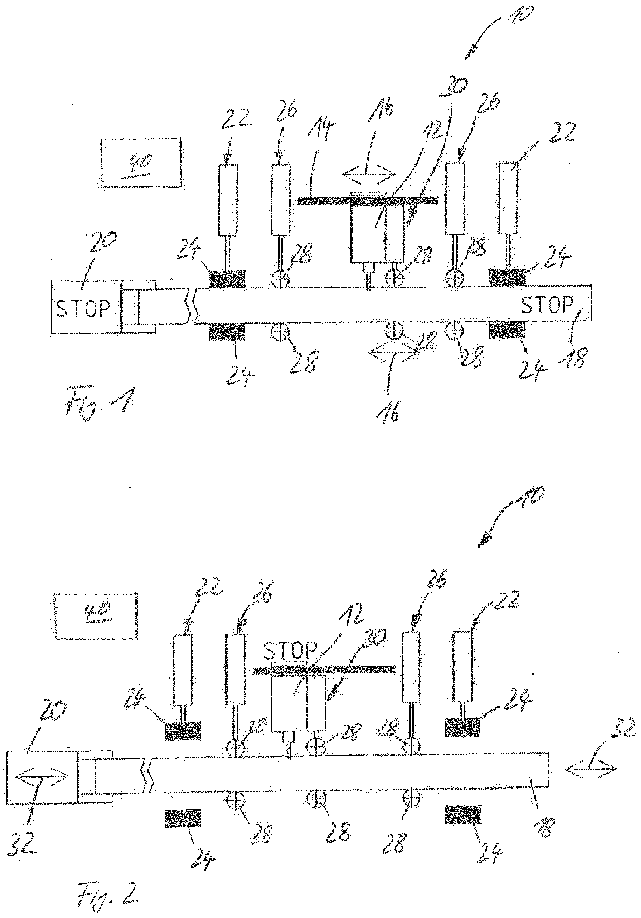

Die Darstellung der Fig. 1 zeigt schematisch eine erfindungsgemäße Profilbearbeitungsvorrichtung 10. Die Profilbearbeitungsvorrichtung 10 weist ein Werkzeug 12 zur Profilbearbeitung auf, das bei der schematischen Darstellung als Bohrer bzw. Fräser ausgebildet ist. Die Darstellung des Werkzeugs 12 ist nur beispielhaft, beispielsweise kann als Werkzeug auch eine Sägeeinrichtung oder dergleichen vorgesehen sein. Das Werkzeug 12 ist an einem schematisch angedeuteten Werkzeugträger befestigt, der wiederum an einer Führungsschiene 14 in den Richtungen des Doppelpfeils 16 verschiebbar angeordnet ist. Der Doppelpfeil 16 zeigt eine Verschiebung in oder entgegen einer Transportrichtung an, in der ein zu bearbeitendes Profil 18 durch die Profilbearbeitungsvorrichtung 10 hindurchtransportiert wird. Diese Transportrichtung gemäß dem Doppelpfeil 16 entspricht dabei auch einer Längsrichtung des zu bearbeitenden Profils 18.

Das Profil 18 ist an seinem in Fig. 1 linken Stirnende mittels einer Vorschubeinrichtung 20 geklemmt. Die Vorschubeinrichtung 20 weist einen Greifer auf, der, wie in Fig. 1 dargestellt ist, eine Stirnseite des zu bearbeitenden Profils 18 ergreift und der in den Richtungen des Doppelpfeils 16 verschiebbar ist.

Die Profilbearbeitungsvorrichtung 10 weist darüber hinaus zwei Plattenspanner 22 auf, die jeweils zwei Spannplatten 24 haben, mit denen das Profil 18 festgespannt werden kann. Die Plattenspanner 22 sind dabei relativ zu einem nicht dargestellten Maschinenrahmen fest angeordnet, lediglich die Spannplatten 24 können sich auf das Profil 18 zu bzw. von diesem weg bewegen. Mittels der Plattenspanner 22 kann dadurch das Profil 18 relativ zu einem Maschinenrahmen fixiert werden.

Die Profilbearbeitungsvorrichtung 10 weist darüber hinaus zwei Rollenspanner 26 auf. Jeder Rollenspanner 26 weist zwei Spannrollen 28 auf, die auf das Profil 18 zu oder von diesem weg bewegt werden können. Die Spannrollen 28 sind jeweils um Drehachsen drehbar, die senkrecht zur Transportrichtung bzw. der Längsrichtung des Profils 18 liegen.

Ein weiterer Rollenspanner 30 ist starr mit dem Werkzeug 12 verbunden und kann somit, zusammen mit dem Werkzeug 12, in den Richtungen des Doppelpfeils 16 verschoben werden. Der Rollenspanner 30 weist zwei Spannrollen 28 auf, die auf das Profil 18 zu bzw. von diesem weg bewegt werden können. Aufgrund der Spannrollen 28 können im Zustand der Fig. 1, in dem das Profil 18 mittels der Plattenspanner 22 relativ zu einem Maschinenrahmen fixiert ist, die Spannrollen 28 auf den Oberflächen des Profils 18 abrollen, wenn das Werkzeug 12 in den Richtungen des Doppelpfeils 16 bewegt wird.

In der Fig. 1 nicht dargestellt aber selbstverständlich ist, dass das Werkzeug 12 darüber hinaus senkrecht zu den Richtungen des Doppelpfeils 16 bewegt werden kann, beispielsweise um in das Profil 18 eine quer zur Transportrichtung verlaufende Nut einzufräsen. Darüber hinaus kann das Werkzeug 12 in nicht dargestellter Weise auch auf das Profil 18 zu oder von diesem weg bewegt werden. Solche Bewegungen senkrecht zur Transportrichtung bzw. senkrecht zum Doppelpfeil 16 erfolgen dann unabhängig vom Rollenspanner 30. Das Werkzeug 12 kann in nicht dargestellter Weise auch als Drehkranz ausgebildet sein, um eine Bearbeitung des Profils 18 von oben, von unten und von beiden Seiten her in besonders einfacher Weise zu ermöglichen.

Die Darstellung der Fig. 1 stellt schematisch eine erste Betriebsart der Profilbearbeitungsvorrichtung 10 dar, bei der das Profil 18 relativ zu einem Maschinenrahmen fixiert ist und infolgedessen eine Profilbearbeitung mit dem Werkzeug 12 mittels einer Bewegung des Werkzeugs 12 in den Richtungen des Doppelpfeils 16 oder senkrecht hierzu erfolgt. Die Rollenspanner 26 sowie 30 sind ebenfalls aktiviert, so dass die Spannrollen 28 an dem Profil 18 anliegen. Das Profil 18 ist dadurch zuverlässig fixiert und eine Bearbeitung durch das Werkzeug 12 kann mit hoher Präzision erfolgen. Darüber hinaus kann das Werkzeug 12 auch vergleichsweise große Kräfte in das Profil 18 einleiten, da dieses ja zuverlässig mittels der Plattenspanner 24 und der Rollenspanner 26, 30 fixiert ist. Die Fixierung des Profils 18 ist in der Darstellung der Fig. 1 durch das Wort "Stop" im Profil 18 versinnbildlicht. Auch die Vorschubeinrichtung 20 ist bei der in Fig. 1 schematisch dargestellten ersten Betriebsart blockiert, was ebenfalls durch das Wort "Stop" auf der Vorschubeinrichtung 20 dargestellt ist.

Die erste Betriebsart, wie sie in Fig. 1 dargestellt ist, ist für Bearbeitungen mit hoher Präzision oder für die Bearbeitung von Profilen 18 aus stabilem bzw. steifem Material geeignet, beispielsweise Aluminiumprofilen. Da über das Werkzeug 12 hohe Kräfte in das Profil eingeleitet werden können, ist diese erste Betriebsart auch für das Bearbeiten von Profilen mit hohen Wandstärken gut geeignet.

Die Darstellung der Fig. 2 zeigt die Profilbearbeitungsvorrichtung der Fig. 1 in einer zweiten Betriebsart. Bei dieser zweiten Betriebsart sind die Spannplatten 24 der Plattenspanner 22 von dem Profil 18 abgehoben. Dahingegen liegen die Spannrollen 28 der Rollenspanner 26, 30 auf den Oberseiten des Profils 18 auf. Das Profil 18 kann infolgedessen in und entgegen seiner Längsrichtung relativ zum Maschinenrahmen bewegt werden, was durch einen Doppelpfeil 32 angedeutet ist. Eine Bewegung des Profils 18 in den Richtungen des Doppelpfeils 32 wird mittels der Vorschubeinrichtung 20 bewirkt. In die Vorschubeinrichtung 20 ist infolgedessen ebenfalls ein Doppelpfeil 32 eingezeichnet. Das Werkzeug 12 beziehungsweise der Werkzeugträger ist bei der dargestellten zweiten Betriebsart dahingehend relativ zum Maschinenrahmen fixiert. Dies ist durch das Wort "Stop" oberhalb des Werkzeugs 12 dargestellt.

Um das Profil 18 zu bearbeiten, wird dieses mittels der Vorschubeinrichtung 20 in den Richtungen des Doppelpfeils 32 relativ zum Werkzeug 12 und somit relativ zum Maschinenrahmen bewegt. Das Werkzeug 12 kann darüber hinaus, wie bereits erläutert wurden, Bewegungen senkrecht zum Doppelpfeil 32 ausführen, in Fig. 2 also nach oben und unten oder auch in die Zeichenebene hinein und aus dieser heraus. Während der Bewegung durch die Vorschubeinheit 20 ist das Profil 18 dabei durch die Rollenspanner 26, 30 sicher geführt.

Die in Fig. 2 dargestellte zweite Betriebsart eignet sich daher dazu, um eine hohe Bearbeitungsgeschwindigkeit bzw. geringe Durchlaufzeiten von Profilen zu erzielen. Beispielsweise wird die zweite Betriebsart der Fig. 2 dann angewendet, wenn Kunststoffprofile 18 bearbeitet werden sollen.

Die Auswahl der beiden in Fig. 1 und Fig. 2 dargestellten Betriebsarten bei der Profilbearbeitungsvorrichtung 10 erfolgt durch eine schematisch dargestellte Steuereinheit 40 der Profilbearbeitungsvorrichtung 10 automatisch in Abhängigkeit von vorgegebenen Randbedingungen. Solche Randbedingungen können beispielsweise eine gewünschte Bearbeitungstoleranz bei der Profilbearbeitung, eine gewünschte Bearbeitungsgeschwindigkeit bei der Profilbearbeitung, eine vorgegebene Spannkraft auf das Profil, ein Material des zu bearbeitenden Profils, eine Oberfläche des zu bearbeitenden Profils, eine Wandstärke des zu bearbeitenden Profils, eine Steifigkeit des zu bearbeitenden Profils und/oder ein für die Profilbearbeitung vorgegebenes Werkzeug sein. Die Steuereinheit 40 erhält entsprechende Informationen von einer übergeordneten Steuerung oder unmittelbar über eine Dateneingabe. Alternativ kann die Auswahl zwischen den Betriebsarten auch manuell durch einen Bediener oder durch Vorgabe durch ein Steuerungsprogramm erfolgen.

Ist eine Oberfläche des Profils 18 beispielsweise blank oder unempfindlich beschichtet und ist eine Beschädigung dieser lackierten Oberfläche durch die Bewegung des Profils während der Bearbeitung auf den Rollenspannern 26, 30 nicht zu befürchten, so kann die zweite Betriebsart gemäß Fig. 2 ausgewählt werden, bei der lediglich die Spannrollen 28 der Rollenspanner 26, 30 die Oberflächen des ruhenden Profils 18 berühren. Die Spannrollen 28 sind dabei vorteilhafterweise als Polyurethanrollen ausgebildet, die einerseits eine zuverlässige Führung ermöglichen und andererseits keine Beschädigung auch von lackierten Oberflächen verursachen.

Weist das Profil 18 dahingegen eine hohe Wandstärke auf und ist beispielsweise als Aluminiumprofil ausgebildet oder ist eine Beschädigung einer lackierten Oberfläche durch die Bewegung des Profils während der Zerspanung zu befürchten, so wählt die Steuereinheit 40 der Profilbearbeitungsvorrichtung 10 vorteilhafterweise die erste Betriebsart gemäß Fig. 1 aus. Bei dieser ersten Betriebsart ist das Profil 18 relativ zum Maschinenrahmen mittels der Plattenspanner 24 zuverlässig fixiert und es können bei der Profilbearbeitung auch über das Werkzeug 12 hohe Kräfte in das Profil 18 eingeleitet werden. Durch die Verwendung von polyurethanbeschichteten Spanplatten wird das ruhende Profil mit geringer Flächenpressung beaufschlagt und so dessen Oberfläche maximal geschont.

Neben den anhand der Fig. 1 und 2 erläuterten Betriebsarten ist eine dritte Betriebsart möglich, bei der lediglich die Rollenspanner 26, 30 auf das Profil 18 zugestellt sind, neben der Vorschubeinrichtung 20 aber auch zusätzlich noch das Werkzeug 12 in den Richtungen des Doppelpfeils 16 bewegt wird.

Mit der Erfindung wird somit eine äußerst flexibel einzusetzende Profilbearbeitungsvorrichtung 10 geschaffen, die, je nach den gegebenen Randbedingungen, ein optimales Arbeitsergebnis erzielen kann.

## Patentansprüche

1. Profilbearbeitungsvorrichtung mit wenigstens einem Werkzeug (12) zur Profilbearbeitung, wenigstens einer Spannvorrichtung für ein zu bearbeitendes Profil (18) und einer Vorschubeinrichtung (20) zum Bewegen eines zu bearbeitenden Profils (18) in einer Transportrichtung, die einer Längsrichtung des Profils (18) entspricht, durch die Profilbearbeitungsvorrichtung (10), wobei das Werkzeug (12) an einem Werkzeugträger angeordnet ist und wobei das Werkzeug (12) und der Werkzeugträger ausgebildet sind, das Profil (18) im Wesentlichen allseitig zu bearbeiten, wobei die Spannvorrichtung wenigstens einen Plattenspanner (22) zum Fixieren eines zu bearbeitenden Profils (18) während der Profilbearbeitung mittels des Werkzeugs (12) und wenigstens einen Rollenspanner (26, 30) zum Führen des Profils (18) während einer Profilbearbeitung des Werkzeugs (12) bei gleichzeitiger Bewegung des Profils (18) mittels der Vorschubeinrichtung aufweist, **dadurch gekennzeichnet, dass** der Werkzeugträger in und entgegen einer Längsrichtung eines zu bearbeitenden Profils verschiebbar ist, und dass Mittel zum Einstellen einer ersten Betriebsart, bei der das zu bearbeitende Profil (18) mittels der Plattenspanner (22) relativ zu einem Maschinenrahmen fixiert ist, oder einer zweiten Betriebsart, bei der das zu bearbeitende Profil (18) mittels wenigstens eines der Rollenspanner (26, 30) geführt ist und das Profil (18) mittels der Vorschubeinrichtung bewegt wird, vorgesehen sind.

2. Profilbearbeitungsvorrichtung nach Anspruch 1, **dadurch gekennzeichnet, dass** wenigstens ein Rollenspanner (30) an dem verschiebbaren Werkzeugträger angeordnet ist.

3. Profilbearbeitungsvorrichtung nach Anspruch 1 oder 2, **dadurch gekennzeichnet, dass** wenigstens eine Sägeeinrichtung an dem verschiebbaren Werkzeugträger angeordnet ist.

4. Profilbearbeitungsvorrichtung nach Anspruch 1, 2 oder 3, **dadurch gekennzeichnet, dass** der verschiebbare Werkzeugträger als verschiebbares Portal ausgebildet ist.

5. Profilbearbeitungseinrichtung nach wenigstens einem der Ansprüche 1 bis 4, **dadurch gekennzeichnet, dass** ein Drehkranz mit wenigstens einem Werkzeug an dem verschiebbaren Werkzeugträger angeordnet ist, wobei eine Drehachse des Drehkranzes senkrecht zur Transportrichtung eines Profils angeordnet ist und wobei ein zu bearbeitendes Profil innerhalb des Drehkranzes angeordnet ist.

6. Profilbearbeitungseinrichtung nach Anspruch 5, **dadurch gekennzeichnet, dass** der Drehkranz in zwei senkrecht zur Transportrichtung liegenden Richtungen verschiebbar an dem Werkzeugträger angeordnet ist.

7. Verfahren zum Bearbeiten von Profilen (18) mit einer Profilbearbeitungseinrichtung (10) nach wenigstens einem der vorstehenden Ansprüche, **dadurch gekennzeichnet, dass** für eine Profilbearbeitung mit einem Werkzeug (12) wenigstens eine erste oder zweite Betriebsart in Abhängigkeit von vorgegebenen Randbedingungen ausgewählt wird, wobei bei der ersten Betriebsart der wenigstens eine Plattenspanner (22) zum Fixieren des Profils (18) während einer Profilbearbeitung mit dem Werkzeug (12) ausgewählt wird und wobei bei der zweiten Betriebsart der wenigstens eine Rollenspanner (26, 30) zum Führen des Profils während einer Profilbearbeitung mit dem Werkzeug (12) ausgewählt wird.

8. Verfahren nach Anspruch 7, **dadurch gekennzeichnet, dass** bei der ersten Betriebsart während der Profilbearbeitung die Vorschubeinrichtung (20) deaktiviert und das wenigstens ein Werkzeug (12) relativ zu einem Maschinenrahmen wenigstens in und entgegen der Transportrichtung bewegt wird.

9. Verfahren nach Anspruch 7 oder 8, **dadurch gekennzeichnet, dass** bei der zweiten Betriebsart während der Profilbearbeitung die Vorschubeinrichtung aktiviert und das wenigstens eine Werkzeug (12) relativ zum Maschinenrahmen gegenüber einer Bewegung wenigstens in und entgegen der Transportrichtung blockiert wird.

10. Verfahren nach wenigstens einem der Ansprüche 7 bis 9, **gekennzeichnet durch** Auswählen einer dritten Betriebsart in Abhängigkeit von vorgegebenen Randbedingungen, wobei bei der dritten Betriebsart der wenigstens eine Rollenspanner (26, 30) zum Führen des Profils (18) während einer Profilbearbeitung ausgewählt wird, während der Profilbearbeitung die Vorschubeinrichtung (20) aktiviert wird und während der Profilbearbeitung das wenigstens eine Werkzeug (12) relativ zum Maschinenrahmen wenigstens in und entgegen der Transportrichtung bewegt wird.

11. Verfahren nach wenigstens einem der Ansprüche 7 bis 10, **dadurch gekennzeichnet, dass** die Randbedingungen eine gewünschte Bearbeitungstoleranz bei der Profilbearbeitung, eine gewünschte Bearbeitungsgeschwindigkeit bei der Profilbearbeitung, eine vorgegebene Spannkraft auf das Profil (18), ein Material des zu bearbeitenden Profils (18), eine Oberfläche des zu bearbeitenden Profils (18), eine Wandstärke des zu bearbeitenden Profils (18), eine Steifigkeit des bearbeitenden Profils (18) und/oder ein für die Profilbearbeitung vorgegebenes Werkzeug (12) aufweisen.

12. Verfahren nach einem der vorstehenden Ansprüche 7 bis 11, **dadurch gekennzeichnet, dass** das Auswählen zwischen den Betriebsarten automatisch mittels einer Steuereinheit (40) der Profilbearbeitungseinrichtung (10) erfolgt.

## Claims

1. Profile machining device, comprising at least one tool (12) for profile machining, at least one clamping device for a profile (18) to be machined, and an advancing device (20) for moving a profile (18) to be machined through the profile machining device (10) along a transport direction corresponding to a longitudinal direction of the profile (18), wherein the tool (12) is disposed on a tool holder, and wherein the tool (12) and the tool holder are configured to machine the profile (18) essentially on all sides, wherein the clamping device includes at least one plate clamp (22) for fixing a profile (18) to be machined during a profile machining procedure using the tool (12) and at least one roller clamp (26, 30) for guiding the profile (18) during a profile machining procedure of the tool (12) with simultaneous moving of the profile (18) using the advancing device, **characterized in that** the tool holder is displaceable in and counter a longitudinal direction of a profile to be machined, and **in that** means are provided for setting a first operation mode, wherein the profile (18) to be machined is fixed relative to a machine frame using the plate clamps (22), or a second operation mode, wherein the profile (18) to be machined is guided using at least one of the roller clamps (26, 30) and the profile (18) is moved using the advancing device.

2. Profile machining device according to claim 1, **characterized in that** at least one roller clamp (30) is disposed on the displaceable tool holder.

3. Profile machining device according to claim 1 or 2, **characterized in that** at least one sawing device is disposed on the displaceable tool holder.

4. Profile machining device according to claim 1, 2 or 3, **characterized in that** the displaceable tool holder is a displaceable gateway.

5. Profile machining device according to at least one of claims 1 to 4, **characterized in that** a rotating assembly with at least one tool is disposed on the displaceable tool holder, wherein a rotational axis of the rotating assembly is perpendicular to the transport direction of a profile, and wherein a profile to be machined is located within the rotating assembly.

6. Profile machining device according to claim 5, **characterized in that** the rotating assembly is disposed on the tool holder to be displaceable in two directions oriented perpendicular to the transport direction.

7. Method for machining profiles (18) using a profile machining device (10) according to at least one of the preceding claims, **characterized in that** for a profile machining procedure using a tool (12) at least one of a first or second operation mode is selected as a function of predetermined boundary conditions, wherein in the first operation mode the at least one plate clamp (22) is selected for fixing the profile (18) during a profile machining procedure using the tool (12), and wherein in the second operation mode the at least one roller clamp (26, 30) is selected for guiding the profile during a profile machining procedure using the tool (12).

8. Method according to claim 7, **characterized in that** in the first operation mode during the profile machining procedure the advancing device (20) is deactivated and the at least one tool (12) is moved relative to a machine frame at least in and counter the transport direction.

9. Method according to claim 7 or 8, **characterized in that** in the second operation mode during the profile machining procedure the advancing device is activated and the at least one tool (12) is blocked relative to the machine frame in relation to movement at least in and counter the transport direction.

10. Method according to at least one of claims 7 to 9, **characterized by** selecting a third operation mode as a function of predetermined boundary conditions, wherein in the third operation mode the at least one roller clamp (26, 30) is selected for guiding the profile (18) during a profile machining procedure, the advancing device (20) is activated during the profile machining procedure, and the at least one tool (12) is moved relative to the machine frame at least in and counter the transport direction during the profile machining procedure.

11. Method according to at least one of claims 7 to 10, **characterized in that** the boundary conditions include a desired machining tolerance during the profile machining procedure, a desired machining speed during the profile machining procedure, a predetermined clamping force on the profile (18), a material of the profile (18) to be machined, a surface of the profile (18) to be machined, a wall thickness of the profile (18) to be machined, a rigidity of the profile (18) to be machined, and/or a predetermined tool (12) for the profile machining procedure.

12. Method according to any of the preceding claims 7 to 11, **characterized in that** selecting between the operation modes is automated using a control device (40) of the profile machining device (10).

## Revendications

1. Dispositif d'usinage de profilés comprenant au moins un outil (12) pour l'usinage de profilés, au moins un dispositif de serrage pour un profilé à usiner (18) et un dispositif d'avance (20) pour le déplacement à travers le dispositif d'usinage de profilés (10) d'un profilé à usiner (18) dans une direction de transport qui correspond à une direction longitudinale du profilé (18), l'outil (12) étant disposé sur un porte-outil et l'outil (12) et le porte-outil étant réalisés pour usiner le profilé (18) essentiellement de tous les côtés, le dispositif de serrage présentant au moins un dispositif de serrage à plaques (22) pour la fixation d'un profilé à usiner (18) pendant l'usinage du profilé au moyen de l'outil (12) et au moins un dispositif de serrage à rouleaux (26, 30) pour guider le profilé (18) pendant un usinage du profilé par l'outil (12) dans le cas d'un déplacement simultané du profilé (18) au moyen du dispositif d'avance, **caractérisé en ce que** le porte-outil peut être déplacé dans une direction longitudinale d'un profilé à usiner et dans la direction opposée, et **en ce que** des moyens sont prévus pour ajuster un premier mode de fonctionnement dans lequel le profilé à usiner (18) est fixé par rapport à un châssis de machine au moyen du dispositif de serrage à plaques (22) ou un deuxième mode de fonctionnement dans lequel le profilé à usiner (18) est guidé au moyen d'au moins l'un des dispositifs de serrage à rouleaux (26, 30) et le profilé (18) est déplacé au moyen du dispositif d'avance.

2. Dispositif d'usinage de profilés selon la revendication 1, **caractérisé en ce qu'**au moins un dispositif de serrage à rouleaux (30) est disposé au niveau du porte-outil déplaçable.

3. Dispositif d'usinage de profilés selon la revendication 1 ou 2, **caractérisé en ce qu'**au moins un dispositif de sciage est disposé sur le porte-outil déplaçable.

4. Dispositif d'usinage de profilés selon la revendication 1, 2 ou 3, **caractérisé en ce que** le porte-outil déplaçable est réalisé sous forme de portail déplaçable.

5. Dispositif d'usinage de profilés selon au moins l'une quelconque des revendications 1 à 4, **caractérisé en ce qu'**une couronne rotative avec au moins un outil est disposée sur le porte-outil déplaçable, un axe de rotation de la couronne rotative étant disposé perpendiculairement à la direction de transport d'un profilé et un profilé à usiner étant disposé à l'intérieur de la couronne rotative.

6. Dispositif d'usinage de profilés selon la revendication 5, **caractérisé en ce que** la couronne rotative est disposée sur le porte-outil de manière déplaçable dans deux directions situées perpendiculairement à la direction de transport.

7. Dispositif d'usinage de profilés (18) comprenant un dispositif d'usinage de profilés (10) selon au moins l'une quelconque des revendications précédentes, **caractérisé en ce que** pour un usinage de profilés avec un outil (12), au moins un premier ou un deuxième mode de fonctionnement est sélectionné en fonction de conditions limites prédéfinies, l'au moins un dispositif de serrage à plaques (22), dans le premier mode de fonctionnement, étant sélectionné pour fixer le profilé (18) pendant un usinage du profilé avec l'outil (12) et l'au moins un dispositif de serrage à rouleaux (26, 30), dans le deuxième mode de fonctionnement, étant sélectionné pour guider le profilé pendant un usinage du profilé avec l'outil (12).

8. Procédé selon la revendication 7, **caractérisé en ce que** dans le premier mode de fonctionnement pendant l'usinage de profilés, le dispositif d'avance (20) est désactivé et l'au moins un outil (12) est déplacé par rapport à un châssis de machine au moins dans la direction de transport et dans la direction opposée.

9. Procédé selon la revendication 7 ou 8, **caractérisé en ce que** dans le deuxième mode de fonctionnement pendant l'usinage de profilés, le dispositif d'avance est activé et l'au moins un outil (12) est bloqué par rapport au châssis de machine par rapport à un déplacement au moins dans la direction de transport et dans la direction opposée.

10. Procédé selon au moins l'une quelconque des revendications 7 à 9, **caractérisé par** la sélection d'un troisième mode de fonctionnement en fonction de conditions limites prédéfinies, l'au moins un dispositif de serrage à rouleaux (26, 30), dans le troisième mode de fonctionnement, étant sélectionné pour guider le profilé (18) pendant un usinage du profilé, pendant l'usinage du profilé, le dispositif d'avance (20) est activé, et pendant l'usinage du profilé, l'au moins un outil (12) étant déplacé par rapport au châssis de machine au moins dans la direction de transport et dans la direction opposée.

11. Procédé selon au moins l'une quelconque des revendications 7 à 10, **caractérisé en ce que** les conditions limites incluent une tolérance d'usinage souhaitée lors de l'usinage du profilé, une vitesse d'usinage souhaitée lors de l'usinage du profilé, une force de serrage prédéfinie sur le profilé (18), un matériau du profilé à usiner (18), une surface du profilé à usiner (18), une épaisseur de paroi du profilé à usiner (18), une rigidité du profilé à usiner (18) et/ou un outil (12) prédéfini pour l'usinage du profilé.

12. Procédé selon l'une quelconque des revendications précédentes 7 à 11, **caractérisé en ce que** la sélection entre les modes de fonctionnement s'effectue automatiquement au moyen d'une unité de commande (40) du dispositif d'usinage de profilés (10).
